# DEMANDE DE BREVET EUROPEEN

(11) **EP 3 722 081 A1**
(43) Date de publication de la demande: **14.10.2020**
(21) Numéro de dépôt: 20169075.7
(22) Date de dépôt: 09.04.2020
(51) Int. Cl.: B29C 70/02, B29C 70/46, B32B 5/02, B32B 27/06, B32B 27/12, B32B 27/32, B29L 31/30

(54) **PROCÉDÉ DE FABRICATION D'UNE PIÈCE D'ÉQUIPEMENT DE VÉHICULE AUTOMOBILE ET PIÈCE D'ÉQUIPEMENT ASSOCIÉE**

(30) Priorité: 12.04.2019 FR 1903916
(71) Demandeur: Faurecia Automotive Industrie, 92000 Nanterre (FR)
(72) Inventeur: JEUNESSE, Steve, 08210 MOUZON (FR); BATHELIER, Xavier, 08240 SAINT PIERREMONT (FR)
(74) Mandataire: Lavoix

(57) **Abrégé**

L'invention concerne un procédé de fabrication d'une pièce d'équipement de véhicule automobile, ladite pièce comportant : une première couche (12) composite ; et une deuxième couche (14) poreuse, solidaire de la première couche ; ledit procédé comprenant les étapes suivantes :
- formation d'un empilement comprenant : un mat comprenant des fibres (22) céramiques ; une nappe poreuse (30) comprenant des cellules ouvertes (32) ; et une nappe fusible, disposée entre le mat fibreux et la nappe poreuse et comportant un matériau polymère (26) ; puis
- chauffage et compression dudit empilement, entraînant une fusion et une imprégnation du matériau polymère (26) dans le mat fibreux et dans les cellules ouvertes (32) de la nappe poreuse ; puis
- refroidissement de l'empilement, entraînant une solidarisation du mat fibreux et de la nappe poreuse imprégnés dudit matériau polymère.

## Description

La présente invention concerne un procédé de fabrication d'une pièce d'équipement de véhicule automobile, ladite pièce comportant une première couche en matériau composite et une deuxième couche en matériau poreux, solidaire de la première couche

L'invention s'applique particulièrement aux pièces d'équipement destinées à l'insonorisation d'un compartiment du véhicule, tel que le compartiment moteur. La fabrication d'une telle pièce d'équipement est notamment décrite dans le document WO2013110573.

Une telle pièce est typiquement réalisée par une première étape de thermoformage de la première couche composite, suivie d'une deuxième étape de thermoformage de la couche poreuse et assemblage des deux couches.

En particulier, la première couche composite est fréquemment réalisée à partir d'un feutre à base de fibres de polymère et de fibres de céramique, désigné couramment par l'appellation « Sommold ». Un tel matériau nécessite un premier cycle de chauffage/compression puis refroidissement, avant assemblage avec la couche poreuse.

La présente invention a pour but de proposer un procédé de réalisation plus simple et moins coûteux que les procédés connus.

A cet effet, l'invention a pour objet un procédé du type précité, comprenant les étapes suivantes : formation d'un empilement comprenant : un mat fibreux comprenant des fibres céramiques ; une nappe poreuse, formée d'un matériau comprenant des cellules ouvertes ; et une première nappe fusible, disposée entre le mat fibreux et la nappe poreuse et comportant un matériau polymère ; puis chauffage et compression dans un moule dudit empilement, entraînant une fusion du matériau polymère et une imprégnation dudit matériau polymère fondu, d'une part dans le mat fibreux, d'autre part dans les cellules ouvertes de la nappe poreuse ; puis refroidissement de l'empilement, entraînant une solidification du matériau polymère et une solidarisation du mat fibreux et de la nappe poreuse imprégnés dudit matériau polymère, le mat fibreux et la nappe poreuse formant ainsi respectivement la première et la deuxième couches de la pièce d'équipement.

Suivant d'autres aspects avantageux de l'invention, le procédé comporte l'une ou plusieurs des caractéristiques suivantes, prises isolément ou suivant toutes les combinaisons techniquement possibles :
- le matériau polymère présente un indice de fluidité à chaud supérieur à 20g/10mn, préférentiellement supérieur à 25g/10mn, à 230°C ;
- le matériau polymère est un polypropylène ;
- la première nappe fusible est un non-tissé formé de filaments de matériau polymère ;
- la nappe poreuse comporte une mousse, de préférence une mousse de polyuréthane ;
- le mat fibreux est formé de fibres de verre, chacune desdites fibres étant sensiblement disposée dans un plan perpendiculaire à une direction de l'empilement ;
- l'empilement comporte en outre une deuxième nappe fusible, préférentiellement formée du même matériau polymère que la première nappe fusible, le mat fibreux étant disposé entre les première et deuxième nappes fusibles ;
- l'empilement comporte en outre une couche de parement, la deuxième nappe fusible étant disposée entre ladite couche de parement et le mat fibreux.

L'invention se rapporte en outre à une pièce d'équipement de véhicule automobile issue d'un procédé tel que décrit ci-dessus.

L'invention se rapporte en outre à un véhicule automobile comprenant une pièce d'équipement telle que décrite ci-dessus.

L'invention sera mieux comprise à la lecture de la description qui va suivre, donnée uniquement à titre d'exemple non limitatif et faite en se référant aux dessins sur lesquels :
- [Fig 1] la figure 1 est une vue partielle, en coupe, d'une pièce d'équipement selon un mode de réalisation de l'invention ;
- [Fig 2] la figure 2 est une vue de détail de la pièce d'équipement de la figure 1 ; et
- [Fig 3] la figure 3 est une vue schématique d'une étape d'un procédé de fabrication de la pièce d'équipement des figures 1 et 2.

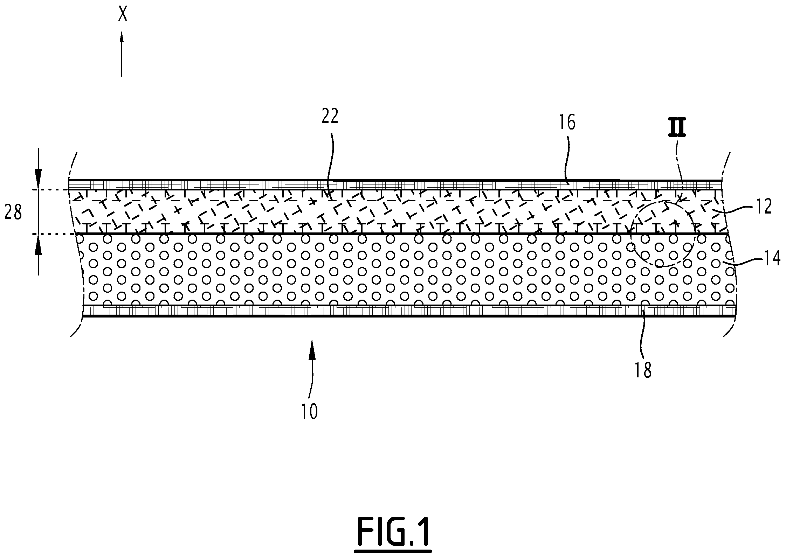

La figure 1 représente une pièce 10 d'équipement de véhicule automobile, selon un mode de réalisation de l'invention. La pièce 10 est notamment destinée à former une paroi structurante et insonorisante du véhicule, une telle paroi étant par exemple fixée sous le capot. En variante, la pièce 10 forme une pièce intérieure du véhicule, telle qu'un sous-moteur ou une sous-planche de bord.

La pièce 10 comporte une première couche 12 en matériau composite ; une deuxième couche 14 en matériau poreux ; et une troisième 16 et une quatrième 18 couches de surface.

La première couche 12 forme une structure de la pièce 10 et présente une certaine rigidité, notamment de sorte à pouvoir être fixée au capot du véhicule par quelques points de fixation.

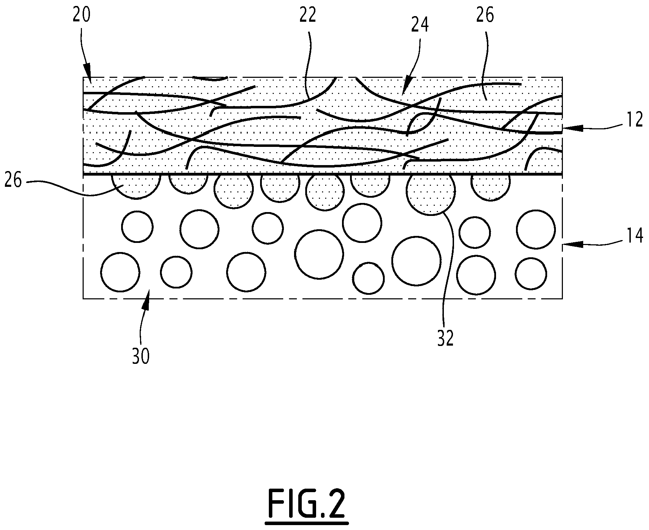

La première couche 12 est formée d'un matériau composite 20. Comme visible à la figure 2, ledit matériau composite 20 est formé de fibres 22 imprégnées d'une matrice 24. De préférence, au moins une partie des fibres 22 sont des fibres céramiques, notamment de fibres de verre.

La matrice 24 est formée d'un matériau polymère 26 thermoplastique, préférentiellement un polypropylène.

Le matériau polymère 26 présente un indice I₁ de fluidité à chaud. L'indice de fluidité à chaud (IFC), ou indice de fluage, ou en anglais *melt flow index* ou MFI, caractérise la capacité d'un polymère à s'écouler sous certaines conditions de températures et de pression. En particulier, l'IFC est inversement relié à la masse molaire du polymère.

L'indice I₁ de fluidité à chaud est préférentiellement supérieur à 20g/10mn, plus préférentiellement supérieur à 25g/10mn, encore plus préférentiellement compris entre 25g/10mn et 40g/10mn De telles valeurs de I₁ correspondent notamment à une température de 230°C avec une charge nominale de 2,160kg, conformément à la Norme ISO 1133 :2005 Méthode A.

La première couche 12 présente une première épaisseur 28 selon une direction X d'empilement des couches.

La deuxième couche 14, au contact de la première couche 12, a une fonction d'insonorisation. La deuxième couche 14 est formé d'un matériau poreux 30, comprenant notamment des cellules ouvertes 32.

Préférentiellement, le matériau poreux 30 est une mousse, telle qu'une mousse de polyuréthane. Préférentiellement, le matériau poreux 30 est un matériau thermoformable.

Comme visible sur la figure 2, des cellules ouvertes 32 de la deuxième couche 14, au contact de la première couche 12, sont imprégnées de matériau polymère 26. Les première 12 et deuxième 14 couches sont ainsi solidarisées l'une à l'autre.

Les troisième 16 et quatrième 18 couches, qui forment une surface de la pièce 10, sont situées de part et d'autre de l'ensemble formé par les première 12 et deuxième 14 couches.

Chacune des troisième 16 et quatrième 18 couches est préférentiellement formée d'un textile non-tissé, par exemple de type aiguilleté. Un tel textile est préférentiellement formé de fibres synthétiques, telles que des fibres de polyéthylène téréphtalate.

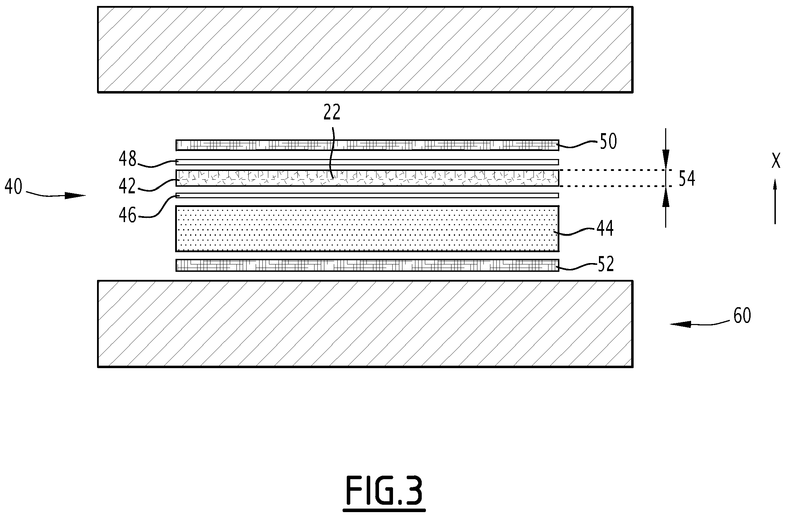

Un procédé de fabrication de la pièce 10 va à présent être décrit. La figure 3 montre une première étape dudit procédé de fabrication.

En particulier, la figure 3 montre un empilement 40 comprenant : un mat fibreux 42 ; une nappe poreuse 44 ; une première 46 et une deuxième 48 nappes fusibles ; et une première 50 et une deuxième 52 couches de parement.

Le mat fibreux 42 comprend des fibres 22 destinées à entrer dans la composition de la première couche 12 précédemment décrite. Préférentiellement, au moins une partie des fibres 22, et plus préférentiellement la totalité desdites fibres, sont des fibres céramiques, notamment de fibres de verre. Le mat fibreux 42 est par exemple un non-tissé de fibres 22 de verre.

Le mat fibreux 42 présente une deuxième épaisseur 54 selon la direction d'empilement X. La deuxième épaisseur 54 est sensiblement égale à la première épaisseur 28 de la première couche 12 précédemment décrite. Plus précisément, la deuxième épaisseur 54 est égale ou supérieure de moins de 10% à la première épaisseur 28.

A cet effet, le mat fibreux 42 est préférentiellement constitué de fibres 22 de verre, toutes sensiblement disposées dans des plans perpendiculaires à la direction d'empilement X. Il en résulte un mat fibreux 42 incompressible ou peu compressible dans ladite direction d'empilement, les fibres de verre étant elles même incompressibles.

La nappe poreuse 44, destinée à former la deuxième couche 14 précédemment décrite, est formée du matériau 30 précédemment décrit, comprenant des cellules ouvertes 32.

Les première 46 et deuxième 48 nappes fusibles sont disposées de part et d'autre du mat fibreux 42 selon la direction d'empilement, la première nappe fusible 46 étant au contact de la nappe poreuse 44.

Chacune des première 46 et deuxième 48 nappes fusibles comporte du matériau polymère 26 précédemment décrit. De préférence, chaque nappe fusible 46, 48 est formée dudit matériau polymère 26.

De préférence, chacune des première 46 et deuxième 48 nappes fusibles est un non-tissé formé de filaments de matériau polymère 26. En variante, une nappe fusible 46, 48 est un film de matériau polymère 26.

Un non-tissé présente cependant l'avantage d'être moins glissant qu'un film, ce qui facilite l'étape d'empilement. De plus, l'utilisation d'un matériau polymère 26 à basse viscosité à chaud est adaptée aux technologies de fabrication de filaments par extrusion.

Les première 50 et deuxième 52 couches de parement sont destinées à former respectivement la troisième 16 et la quatrième 18 couches de surface de la pièce 10. Chacune des première 50 et deuxième 52 couches de parement est préférentiellement formée d'un textile non-tissé, comme décrit ci-dessus.

De préférence, au moins une face de la deuxième couche de parement 52, au contact de la nappe poreuse 44, est couverte d'un adhésif activable à chaud et chimiquement compatible avec le matériau 30 de ladite nappe poreuse. Dans le cas où le matériau 30 est un polyuréthane, l'adhésif est par exemple une poudre de résine époxy.

De manière optionnelle, une face de la première couche de parement 50, au contact de la deuxième nappe fusible 48, comporte également un adhésif activable à chaud.

L'empilement 40 ainsi formé est placé dans un dispositif 60 de compression et de chauffage. Selon un premier mode de réalisation, le dispositif 60 est une presse chauffante. Selon un deuxième mode de réalisation, le dispositif 60 est un moule de thermoformage.

Dans une deuxième étape du procédé, l'empilement 40 est chauffé et comprimé selon la direction d'empilement X, dans le dispositif 60. La température de chauffage est apte à faire fondre le matériau polymère 26 formant les première 46 et deuxième 48 nappes fusibles.

Ainsi, le matériau polymère 26 fondu s'imprègne dans les fibres 22 du mat fibreux 42. Une telle imprégnation est favorisée par la basse viscosité à chaud dudit matériau polymère, qui lui permet une fusion rapide lors du chauffage.

Par ailleurs, du matériau polymère 26 fondu de la première nappe fusible 46 s'introduit également dans les cellules ouvertes 32 de la nappe poreuse 44. Cette introduction est également favorisée par la basse viscosité à chaud dudit matériau polymère.

De préférence, du matériau polymère 26 fondu de la deuxième nappe fusible 48 s'introduit également dans la première couche de parement 50.

Dans le cas où le dispositif 60 est une presse chauffante, l'empilement 40 est ensuite transféré dans un moule de thermoformage avant refroidissement du matériau polymère 26. L'empilement 40 est ainsi thermoformé selon la forme souhaitée, comme décrit par exemple dans le document WO2013110573.

Dans une troisième étape du procédé, l'empilement 40 est refroidi, le matériau polymère 26 revenant à l'état solide. Ledit matériau imprégnant les fibres 22 forme la matrice 24 de la première couche 12 de la pièce 10, comme décrit précédemment.

De plus le matériau polymère 26 introduit dans les cellules ouvertes 32 crée une continuité mécanique entre les première 12 et deuxième 14 couches, solidarisant ainsi lesdites couches l'une à l'autre.

Une telle solidarisation est particulièrement avantageuse dans le cas d'une deuxième couche 14 en mousse de polyuréthane et d'un matériau polymère 26 de type polypropylène, ces deux matériaux étant incompatibles pour un collage chimique.

La pièce 10 est ainsi obtenue de manière monobloc, les troisième 16 et quatrième 18 couches de surface adhérant à l'assemblage par collage et/ou par infiltration du matériau polymère 26 dans la première couche de parement 50.

Le procédé décrit ci-dessus ne comporte qu'un cycle de chauffage/refroidissement. La fabrication de la pièce 10 est donc plus simple et plus rapide que les procédés de l'état de la technique.

## Revendications

1. Procédé de fabrication d'une pièce (10) d'équipement de véhicule automobile, ladite pièce comportant: une première couche (12) en matériau composite; et une deuxième couche (14) en matériau poreux, solidaire de la première couche ; ledit procédé comprenant les étapes suivantes :
- formation d'un empilement (40) comprenant : un mat fibreux (42) comprenant des fibres (22) céramiques ; une nappe poreuse (44), formée d'un matériau (30) comprenant des cellules ouvertes (32) ; et une première nappe fusible (46), disposée entre le mat fibreux et la nappe poreuse et comportant un matériau polymère (26) ; puis
- chauffage et compression dans un moule (60) dudit empilement, entraînant une fusion du matériau polymère et une imprégnation dudit matériau polymère fondu, d'une part dans le mat fibreux, d'autre part dans les cellules ouvertes de la nappe poreuse ; puis
- refroidissement de l'empilement, entraînant une solidification du matériau polymère et une solidarisation du mat fibreux et de la nappe poreuse imprégnés dudit matériau polymère, le mat fibreux et la nappe poreuse formant ainsi respectivement la première et la deuxième couches de la pièce d'équipement.

2. Procédé de fabrication selon la revendication 1, dans lequel le matériau polymère (26) présente un indice de fluidité à chaud (I₁) supérieur à 20g/10mn, préférentiellement supérieur à 25g/10mn, à 230°C.

3. Procédé de fabrication selon la revendication 1 ou la revendication 2, dans lequel le matériau polymère (26) est un polypropylène.

4. Procédé de fabrication selon l'une des revendications précédentes, dans lequel la première nappe fusible (46) est un non-tissé formé de filaments de matériau polymère.

5. Procédé de fabrication selon l'une des revendications précédentes, dans lequel la nappe poreuse (44) comporte une mousse, de préférence une mousse de polyuréthane.

6. Procédé de fabrication selon l'une des revendications précédentes, dans lequel le mat fibreux (42) est formé de fibres (22) de verre, chacune desdites fibres étant sensiblement disposée dans un plan perpendiculaire à une direction (X) de l'empilement.

7. Procédé de fabrication selon l'une des revendications précédentes, dans lequel l'empilement comporte en outre une deuxième nappe fusible (48), préférentiellement formée du même matériau polymère (26) que la première nappe fusible (46), le mat fibreux (42) étant disposé entre les première et deuxième nappes fusibles.

8. Procédé de fabrication selon la revendication 7, dans lequel l'empilement comporte en outre une couche de parement (50), la deuxième nappe fusible étant disposée entre ladite couche de parement et le mat fibreux.

9. Pièce (10) d'équipement de véhicule automobile issue d'un procédé selon l'une des revendications précédentes, comprenant : une première couche (12) en matériau composite ; et une deuxième couche (14) en matériau poreux, solidaire de la première couche.

10. Véhicule automobile, comprenant une pièce (10) d'équipement selon la revendication 9.
